# EUROPEAN PATENT SPECIFICATION

(11) **EP 3 180 263 B1**
(45) Date of publication and mention of the grant of the patent: **28.11.2018**
(21) Application number: 15741194.3
(22) Date of filing: 23.07.2015
(51) Int. Cl.: B65D 75/58, B65D 85/804, A47J 31/44

(54) **FITMENT ASSEMBLY FOR A CONTAINER, PACK FOR PREPARING AN INFUSION BEVERAGE AND MACHINE FOR PREPARING AN INFUSION BEVERAGE**
ANORDNUNG FÜR EINEN BEHÄLTER, PACKUNG ZUR HERSTELLUNG EINES AUFGUSSGETRÄNKES UND MASCHINE ZUR VORBEREITUNG EINES AUFGUSSGETRÄNKES
ENSEMBLE POUR UN CONTENANT, EMBALLAGE POUR LA PRÉPARATION D'UNE BOISSON PAR INFUSION ET MACHINE POUR LA PRÉPARATION D'UNE BOISSON PAR INFUSION

(30) Priority: 14.08.2014 EP 14180915
(43) Date of publication of application: 21.06.2017
(73) Proprietor: Nestec S.A., 1800 Vevey (CH)
(72) Inventor: PERENTES, Alexandre, 1036 Sullens (CH); NEUROHR, Damien, 1950 Sion (CH)
(74) Representative: Navarro Fernández, Maria Isabel
(86) International application number: PCT/EP2015/066845
(87) International publication number: WO 2016/023729

(56) References cited:
- WO-A1-99/05044
- WO-A1-2011/024103
- WO-A1-2011/054402

## Description

### Field of the invention

The present invention relates to a pack for preparing infusion beverages; in particular it refers to a disposable pack for preparing infusion beverages, most preferably tea, by means of a fitment assembly comprised in the disposable pack. The invention also refers to a machine for preparing infusion beverages from such a disposable pack.

### Background of the invention

Devices for preparing infusions, typically tea makers are known devices in the state of the art where tea leaves are typically introduced in a first compartment comprising a filter such that when water is passed through this first compartment, the filtered fluid obtained is conveyed into a second compartment, from where tea is poured from a dedicated outlet. However, these devices have to be cleaned after each use and are not disposable or suitable for one-use only.

Tea bags made of a porous filter paper, silk or food grade plastic, sealed together to conform a bag comprising inside its volume tea leaves, herbal leaves or spices are also common in the state of the art, and perform the function of tea infusers. When these tea bags are introduced in hot water and are kept inside for a certain period of time, depending on the infusion characteristics, the tea beverage is brewed. These tea bags are disposable but are not so convenient for the consumer, who needs to invest quite some time to prepare the beverage and also needs to squeeze the tea bag before putting it away, resulting in a process which is both cumbersome and time consuming.

Using capsules comprising tea or herbal leaves inside through which water would be injected to brew the beverage also presents several disadvantages, such as the time needed to prepare a beverage, for example, the cost of the capsules and the packaging space needed to arrange and keep these capsules.

Therefore, it would be desirable to provide a disposable flexible pack from which infusion beverages can be produced in a reduced time, where recipes and infusion parameters are automatically adapted such that the beverage preparation is optimized. Moreover, the pack needs to be easy to use, clean and requiring the least of input operations from the side of the consumer.

It is known in the state of the art document WO 2011/054402 A1, disclosing a capsule for preparing a food product, comprising a fitment (rigid connection portion) with at least one inlet to inject a fluid inside the capsule and at least one outlet to extract it.

Also known in the state of the art is WO 2011/024103 A1 disclosing a pouch for the preparation of a beverage, comprising and inlet and an outlet opening, communication with the inner space of the pouch where a concentrated dose is arranged for preparing the beverage.

Further, WO 99/05044 A1 discloses a sachet for producing a beverage having a conduit of rigid plastics on one side of the sachet where pressurized water is introduced, and a conduit on another side of the sachet through where the beverage exists.

The present invention comes to provide a solution to the above-described needs, as it will be further explained. The invention also aims at other objects and particularly at the solution of other problems as will appear in the rest of the present description.

### Summary of the invention

According to a first aspect, the invention refers to a fitment assembly 10 for a container comprising a beverage medium, preferably an infusable food or beverage ingredient, typically tea leaves. The fitment assembly 10 of the invention comprises: an inlet chamber 120 to accommodate an inflow of fluid for infusion with the beverage medium to produce a beverage; a tertiary active chamber 231 on one of the sides of the fitment assembly 10to where the infused fluid arrives and a tertiary passive chamber 232 on the reverse side of the fitment assembly 10 to where the infused fluid arrives after having been filtered; a primary filter element 11 filtering the infused fluid coming from the tertiary active chamber 231 and flowing into the tertiary passive chamber 232; and an outlet duct 12 arranged in such a way that the beverage from the tertiary passive chamber 232 enters the outlet duct 12 and flows by gravity towards the exterior of the fitment assembly 10.

The inlet chamber 120 in the fitment assembly 10 of the invention is preferably reversibly configured. The fitment assembly 10 preferably comprises a lid with a first section overlying one of the sides of the inlet chamber 120 and closing the tertiary active chamber 231, and a second section overlying the reverse side of the inlet chamber 120 and closing the tertiary passive chamber 232.

The fitment assembly 10 further comprises two symmetrically arranged inlet notches 110 allowing the fluid to flow out of the inner volume of the inlet chamber 120 for infusion with the beverage medium.

The fitment assembly 10 further comprises an upper filtering notch 18 arranged so as to allow the fluid to go through and into the inner volume of the tertiary active chamber 231.

Preferable, the fitment assembly 10 further comprises a side frontal filtering notch 18' arranged so as to allow the fluid to be conveyed towards the entrance of the outlet duct 12.

The fitment assembly 10 is typically made of a rigid plastic material, preferably made by injection moulding, the material being preferably selected from: polypropylene, polyethylene, polyethylene terephthalate and/or polylactic acid.

Preferably, the primary filter element 11 is designed for filtering particles of a size below around 50 microns. The size of the primary filtering element 11 is preferably comprised in the range from 20 mm² to 500 mm², more preferably in the range of 100 mm² to 200 mm² and, even more preferably, of around 150 mm².

In the fitment assembly 10 according to the invention, the outlet duct 12 is closed by means of a plug 14, the plug 14 being attached to the fitment assembly 10 on another one of its sides, the outlet duct 12 further comprising a weakened area 16 near the plug 14 allowing the separation of the plug 14 from the outlet duct 12.

According to a second aspect, the invention refers to a disposable pack 100 for preparing a beverage, comprising a container 20 where a beverage medium is stored and a fitment assembly 10 as described here above.

The disposable pack 100 preferably presents an essentially plane shape being substantially flexible and configured as a pouch or sachet: the pack is oriented along a plane essentially vertically oriented during beverage production, such that the fitment assembly 10 is preferably arranged at the lower side of the pack during beverage production.

In the disposable pack 100 of the invention the container 20 is made of two flexible sheets bonded together at least on their lateral sides, the fitment assembly 10 being also bonded to one of the remaining open edges of the pack 100 in such a way that the flexible sheets also conform the lid of the fitment assembly 10.

According to a preferred embodiment of the invention, the two flexible sheets are configured by one single flexible sheet folded in half into two parts joined at its free edges to define the inner volume of the container 20.

Preferably, the flexible sheets configuring the container 20 are water impermeable, are bonded together by thermo sealing and are made of a material being one or a combination of the following: plastic laminates, metallised foil or alufoil or fibre base material.

Also preferably, the two flexible sheets are bonded together in a specific area configuring a compartmental channel 250 inside the volume of the pack 100: this compartmental channel 250 is arranged in such a way that it defines inside the volume of the pack 100 a primary chamber 21 where a beverage medium is stored and a secondary chamber 22 where the fluid is conveyed towards the fitment assembly 10.

According to the invention, the disposable pack 100 preferably also comprises a secondary filter element 24 arranged on one of the sides of the primary chamber 21 leading to the secondary chamber 22, designed in such a way that, the fluid leaves the primary chamber 21 through this secondary filter element 24 into the secondary chamber 22, the beverage medium being prevented from passing through the secondary filter element and into the secondary chamber 22.

Preferably, this secondary filter element 24 is configured by bonding together at certain parts the sheets of flexible material making the container 20, these bonded parts configuring a plurality of secondary filtering configuring elements 240 allowing the flow of the fluid towards the secondary chamber 22 and preventing the flow of the beverage medium.

Typically, the filtering characteristics of the secondary filter element 24 are a function of the size and the number of the secondary filtering configuring elements 240, and also of the distance between these secondary filtering configuring elements 240.

According to a preferred embodiment of the invention, the disposable pack (100) further comprises identification means 30 comprising the information on the process parameters to produce the beverage, as a function of the beverage medium, the process parameters being at least one or a combination of the following: temperature of the fluid accommodated into the inlet chamber 120, total volume of fluid and fluid flow accommodated inside the inlet chamber 120. Preferably, two sets of symmetrically arranged identification means 30 are arranged in the pack, so that the process parameters in the identification means 30 can be reversibly read.

Preferably, the identification means 30 comprise recognition means being at least one or a combination of the following: mechanical codes, optical codes, RFID tags, bar codes, magnetic codes, embossing codes or LED. According to a preferred embodiment, the recognition means comprises a plurality of punched holes arranged on the bonded lateral edges of the container 20.

According to yet a third aspect, the invention relates to a machine 200 for preparing a beverage from a disposable pack 100 as the one described previously, the machine 200 comprising receiving means 201 adapted to accommodate the disposable pack 100 in an essentially vertical position during beverage production with the fitment assembly 10 being arranged at the bottom of the pack. The machine 200 further comprises injecting means 230, preferably piercing and injecting means, designed for piercing the lid over the inlet chamber 120 and for accommodating fluid inside the volume of the inlet chamber 120.

Preferably, the injecting means 230 comprise a fluid needle designed for accommodating fluid inside the volume of the inlet chamber 120 at a pressure below around 1 bar, preferably around 0.5 bar.

According to the invention, the machine 200 further comprises a data reader configured to read and retrieve the information of the process parameters from the identification means 30 in the disposable pack 100, the data reader preferably comprising a light emitter device.

Preferably, according to the invention, the receiving means 201 are arranged to accommodate the disposable pack 100 either in a frontal position or in a lateral or side position.

### Brief description of the drawings

Further features, advantages and objects of the present invention will become apparent for a skilled person when reading the following detailed description of non-limiting embodiments of the present invention, when taken in conjunction with the appended drawings, in which:
Fig. 1 shows a frontal schematic view of a disposable pack for preparing infusion beverages according to the present invention, comprising a fitment assembly and a container.
Fig. 2 shows an isometric detailed view of the fitment assembly of the disposable pack for preparing infusion beverages shown in Figure 1, according to the present invention.

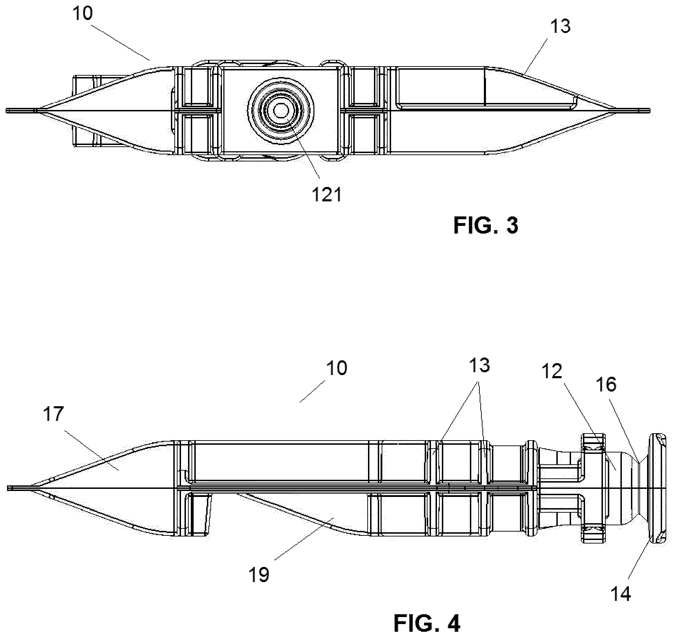

Fig. 3 shows a front detailed view of the fitment assembly of the disposable pack for preparing infusion beverages shown in Figure 1, according to the present invention.
Fig. 4 shows a side detailed view from the right of the fitment assembly of the disposable pack for preparing infusion beverages shown in Figure 1, according to the present invention.
Fig. 5 shows a rear detailed view of the fitment assembly of the disposable pack for preparing infusion beverages shown in Figure 1, according to the present invention.
Fig. 6 shows a top detailed view of the fitment assembly of the disposable pack for preparing infusion beverages shown in Figure 1, according to the present invention.
Fig. 7 shows a side detailed view from the left of the fitment assembly of the disposable pack for preparing infusion beverages shown in Figure 1, according to the present invention.
Fig. 8 shows a bottom detailed view of the fitment assembly of the disposable pack for preparing infusion beverages shown in Figure 1, according to the present invention.
Fig. 9 shows an illustration of another possible embodiment of a machine designed for slidably receiving a disposable pack for preparing infusion beverages according to the present invention.
Fig. 10 shows an illustration of a possible embodiment of a machine designed for receiving frontally a disposable pack for preparing infusion beverages according to the present invention.
Fig. 11 shows the interaction of a disposable pack for preparing infusion beverages according to the present invention with a beverage preparation machine.

### Detailed description of exemplary embodiments

The present invention relates to a *pack 100 for preparing infusion beverages.* The pack 100 of the invention is disposable and comprises a fitment assembly 10 and a container 20. The container 20 is preferably flexible and is typically made of two flexible sheets bonded together, preferably by welding or by heat sealing (thermo sealing), on the lateral sides 27 and 27', on the upper side 28 and on the lower side 29. The fitment assembly 10 is preferably arranged at the lower side 29 of the container 20 such that the sheets cover at least partially the frontal and/or the rear side of the fitment assembly 10.

The *fitment assembly 10* has three functions within the pack 100 according to the invention: it works as inlet for the fluid (typically water) coming into the pack 100 for being infused with a beverage medium which is also comprised inside the volume of the pack 100; it works as a filtering element to filter the brewed infusion beverage before it is dispensed from the pack 100; and finally, the fitment assembly 10 also works as outlet for the infusion beverage brewed and prepared in the pack 100.

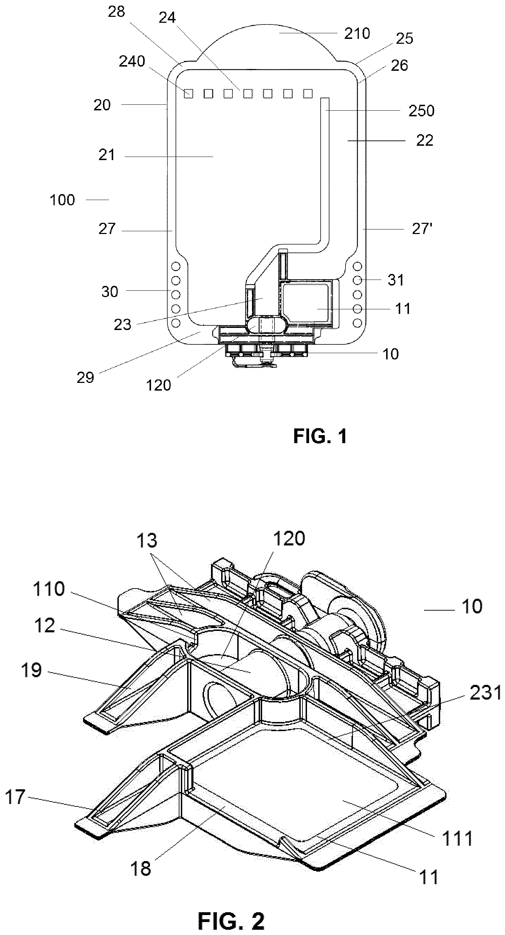

The fitment assembly 10 is preferably arranged in the lower side 29 of the pack 100, as schematically shown in Figure 1. The fitment assembly 10 comprises an outlet duct 12, preferably arranged vertically and parallel to the lateral sides 27 and 27' of the pack 100 in order to allow the dispensing of the infusion beverage by free flow: during preparation and dispensing phases, the pack 100 is preferably arranged vertically, such that the fitment assembly 10 is arranged at the lower side 29 of the container 20, i.e., at the lower side 29 of the pack 100.

The *container 20* is preferably flexible and is made of two flexible water impermeable sheets 25, 26 joined to one another to define an inner volume which is compartmented, as will be explained further in more detail. Typically, the container 20 presents an essentially plane shape being substantially flexible so that it looks like a pouch or sachet. By flexible, it is meant that the sheets 25, 26 can be bent easily. The resulting pack 100 can be bent also, as being soft and can be deformed contrary to rigid containers. The flexible sheet material for the sheets 25, 26 can be plastic laminates, metallised foil or alufoil or fibre base material. According to the invention, the container 20 can be formed of two separate flexible water impermeable sheets 25, 26 joined together or it can be formed of one single flexible water impermeable sheet folded in half into two parts or sheets 25, 26 and joined at its free edges to define the inner volume of the container 20.

According to a preferred embodiment, the container 20 is formed of one single flexible water impermeable sheet folded in half into two parts of flexible sheets which will be referred to as 25, 26, and joined at its free edges, such that the container 20 is configured as a plane pouch made of a flexible material sheet, said sheet being folded at the top of the container 20 (therefore, the upper side 28 will have no welding or heat sealing (thermo sealing) and will be made by the simple bending of the flexible sheet on top) and bonded on its edges (therefore, forming the lateral sides, 27 and 27') to define the inner volume, the bottom bonded edge (lower side 29) typically including the fitment assembly 10. This embodiment constitutes a particularly easy way to manufacture the pack 100 since it requires the cutting of only one piece of sheet - most preferably according to a rectangular shape - and its folding to create the inner volume of the container 20. Typically, also for manufacturing convenience, the fitment assembly 10 is introduced in the lower side 29 of the container 20 during the sealing of its edges, typically by welding or heat sealing.

As shown in Figure 1, the sheets 25, 26 configuring the two sides of the container 20 are sealed together in a specific area in the inside of the container 20: the sheets 25 and 26 are preferably welded or heat sealed together, to form a compartmental channel 250 under a specific shape, as shown in Figure 1, such that the internal different compartments are formed, as it will be further explained.

The compartmental channel 250 delimits together with one of the lateral sides 27, with the upper side 28 and with part of the lower side 29 of the container 20, together with the fitment assembly 10, an inner volume defining a primary chamber 21: in the primary chamber 21, a beverage medium, typically tea leaves, herbal leaves or spices, is confined. Also, the compartmental channel 250 together with the other lateral side 27', with the upper side 28 and with the fitment assembly 10 on the lower side of the container 29 delimits an inner volume defining a secondary chamber 22 to where the brewed fluid, once infused with the beverage medium, is conveyed. Finally, a tertiary chamber 23 is also arranged in the container 20 delimited, comprising two chambers: a tertiary active chamber 231, delimited by one of the flexible sheets and by the primary filtering active side 111 of the primary filter element 11, and a tertiary passive chamber 232, delimited by the other flexible sheet, the primary filtering passive side 112, part of the compartmental channel 250 and an upper sealing wall 17. Therefore, the brewed fluid coming from the secondary chamber 22 is first conveyed into the tertiary active chamber 231, from where it will pass through the primary filtering active side 111 into the tertiary passive chamber 232, thus being filtered, so that the final brewed and filtered fluid will be conveyed to the outside of the pack 100 through the outlet duct 12.

The container 20 also comprises a secondary filter element 24 preferably configured by welding or heat sealing together in the upper part of the container 20 the sheets of material 25, 26 which make the flexible container 20, in certain and defined parts, configuring a plurality of secondary filtering configuring elements 240. In Figure 1, these sheets have been bonded together (typically welded or thermo sealed together) under square shapes, but it is clear that any other shape like circular, rectangular or any other would be possible and would therefore be comprised within the scope of the present invention. The secondary filter element 24 is aimed at retaining in the primary chamber 21 the beverage medium, preferably the tea leaves, while the brewed fluid passes towards the secondary filter element 24 and is directed into the secondary chamber 22. The secondary filter element 24 is designed in such a way that avoids the use of a filter having a bigger size. In fact, the tea leaves actually work as a filter themselves as they block themselves in the entrance of the secondary filter element 24, so this element is kept compact and reduced in size, which therefore optimises the volume of the pack 100.

The filtering characteristics of the secondary filter element 24 are a function of the size and number of the secondary filtering configuring elements 240, and also of the distance between these secondary filtering configuring elements 240.

Different sizes of the container 20 and therefore of the pack 100 could be used in the same machine adapted to store different quantities of ingredients and allowing different volumes of final infusion beverages obtained: typically, it is the configuration of the fitment assembly 10 as to external shape what determines the machine to use. Therefore, the size of the container 20, when extending vertically, does not determine or limit the machine. So, typically, the size of the container 20 will be adaptable and will be made so by modifying the height of said container 20.

The container 20 can also comprise an excrescence 210 enabling the handling of the pack 100 by the user or consumer, as shown in the Figures attached.

Preferably, according to the invention, the pack 100 presents a plane shape oriented along a plane essentially vertically oriented during beverage production in such a way that the water introduced in the fitment assembly 10 flows in an upward direction for infusing the beverage medium comprised in the primary chamber 21.

Preferably, the introduction of the *fitment assembly 10* in the bottom edge of the container during the sealing of its edges to configure the complete pack 100 makes it possible that the flexible sheets 25, 26 can cover at least partially the fitment assembly 10. As shown in Figure 2, for example, the fitment assembly 10 comprises a chamber called inlet chamber 120 which is configured by part of the fitment assembly 10 together with part of the flexible sheets 25, 26 when arranged at least partially over the two sides of the fitment assembly 10. The inlet chamber 120 will be pierced by injecting means 230, preferably piercing and injecting means, in the machine which will produce the infusion beverage from the pack 100: in fact, this inlet chamber 120 will be pierced in the part of the flexible sheets 25, 26 which are arranged over the external parts of the fitment assembly 10 making the inlet chamber 120. Consequently during the single step of bonding the edges of the sheet, it is possible to simultaneously create the inner volume of the container 20, to place the fitment assembly 10 and to close the inlet chamber 120. Preferably the outlet duct 12 is not completely covered by the flexible sheets. Yet it can be visually hidden by a part of the sheets e.g. by a skirt of the sheets. Also preferably, according to the invention, the fitment assembly 10 comprises ribs 13 arranged in at least one of the external surfaces of the fitment assembly 10 for improving the adhesion of the fitment assembly 10 with the flexible material sheet during sealing.

The fitment assembly 10 of the present invention comprises a lid, preferably a yieldably piercable lid made of a flexible material: this lid comprises a first section overlying one of the two reversible parts of the inlet chamber 120 which is in the same side (frontal or rear) of the tertiary active chamber 231, and the tertiary active chamber 231, the lid also comprising a second section overlying the second reversible part of the inlet chamber 120 (which is on the same side as the tertiary passive chamber 232), and the tertiary passive chamber 232. Preferably, according to the invention, this lid is made from the same flexible sheets 25, 26 which configure the two sides of the container 20, for manufacturing reasons. However, the lid could be made out of different parts.

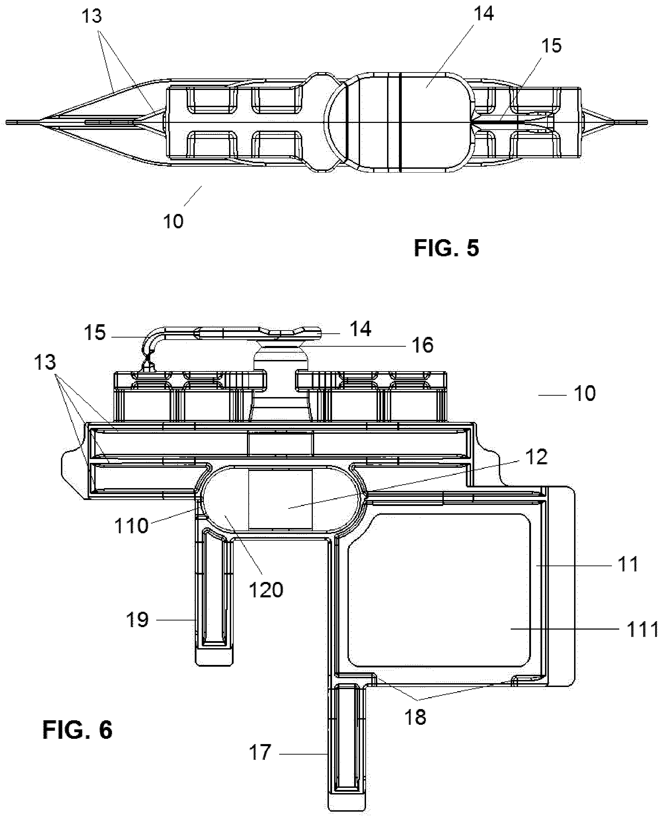

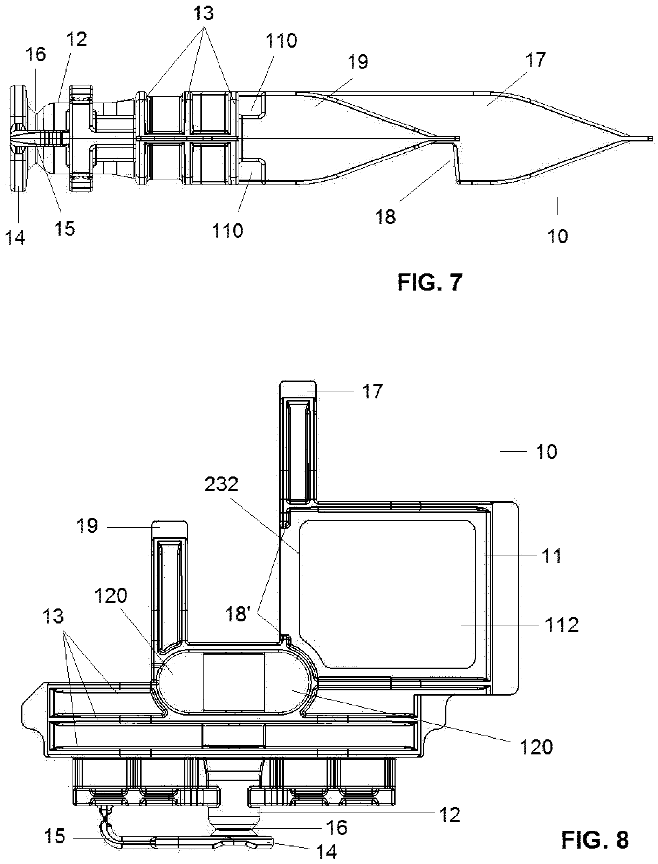

As already described and as it is shown in Figures 6 and 7, the fitment assembly 10 of the invention comprises an inlet chamber 120 into which a fluid is injected by piercing and injecting means 230, typically a needle, which is arranged in a machine into which the pack 100 is inserted for the infusion beverage to be prepared and dispensed. The fitment assembly 10 also comprises an inlet notch 110 in the part of the fitment assembly 10 defining the inlet chamber 120: preferably, the inlet notch 110 comprises two notches symmetrically arranged, as shown in Figure 7, through which the fluid injected into the inlet chamber 120 passes towards the primary chamber 21, where the beverage medium is stored. The piercable lid or cover comprised over the inlet chamber 120 (the one which is pierced by the piercing and injecting means 230) is preferably made out of the flexible sheets 25, 26 when laid over the frontal and rear sides of the fitment assembly 10: therefore, these parts of the flexible sheets will be pierced by the piercing and injecting means 230, typically a needle, perforating this flexible cover and then injecting fluid, preferably water, into the inlet chamber 120.

The fitment assembly 10 of the invention also comprises ribs 13, preferably arranged on both sides of the fitment assembly 10: these ribs 13 are provided on the sides of the fitment assembly 10 to help engage the sheets 25, 26 onto the fitment assembly 10, preferably by welding or heat sealing. Moreover, the fitment assembly 10 comprises an outlet duct 12 through which the brewed product is finally dispensed. Preferably the outlet duct 12 is closed by a plug 14, said plug 14 comprising means for maintaining it attached to the fitment assembly 10 after the opening of the outlet duct 12. Consequently the plug 14 does not interfere with the dispensing of the infusion beverage when it is provided through the outlet duct 12, neither does it fall in the beverage during its production. The means for maintaining the plug 14 attached to the fitment assembly 10 can be a plastic bond 15 attached to the fitment assembly 10, for example, or any other suitable means providing a similar effect. Moreover, the outlet duct 12 can also comprise a weakened area 16 near the plug 14: this weakened area 16 can be made for example as a narrowing of the outlet duct 12 so that it is easier to cut or tear off the plug 14 by the machine once the pack 100 is introduced in it for being processed. Typically, the machine where the pack 100 is introduced cuts or tears the plug 14 automatically when the pack 100 is introduced in the machine or when the or when the beverage preparation is activated.

The outlet duct 12 in the fitment assembly 10 of the invention is preferably configured so that it delivers the product as a free flow, meaning that the product can flow from the outlet duct 12 by simple gravity fall. According to a preferred embodiment of the invention, the outlet duct 12 comprises an opening 121 at the bottom of the fitment assembly 10, said opening 121 having a transverse section with a surface area equivalent to the surface of a circular surface of diameter of at least 1 mm, preferably at most 4 mm, even more preferably comprised between 1.5 and 3 mm. The outlet duct 12 is typically configured as a straight tube oriented essentially vertically in the fitment assembly 10, comprising at its end an opening 121. The length of the tube of the outlet duct 12 is preferably of at least 5 mm. An advantage of the outlet duct 12 of the present invention is that there is no need to implement a particular connection between the mentioned outlet and the machine when a beverage is produced in order to direct the flow of the beverage delivered at the outlet duct 12: the beverage can flow from the outlet duct 12 directly into a drinking cup.

According to the invention, before the infusion beverage is prepared, the outlet duct 12 is closed at its end: generally the outlet duct 12 is closed by manufacturing and is configured for being opened at the food or beverage production step by the machine. By "closed by manufacturing" it is meant that a complete pack 100, comprising the container 20 and the fitment assembly 10, is manufactured with a closed outlet duct 12. This closure guarantees hygienic and shelf life protection. The outlet duct 12 can be opened by the machine preparing the infusion beverage or it can be opened manually by the consumer.

Preferably the plug 14 is part of one single fitment assembly 10: in particular when the spout assembly 10 is made by injection moulding, the design of the mould also comprises that of the plug 14. In the same manner the plastic bond 15 can also be part of the design of the fitment assembly 10 when it is made by injection moulding, which again provides advantages from a manufacturing point of view, as the same part comprises the plug 14 and the bond 15.

The fitment assembly 10 of the invention further comprises a primary filter element 11 integrated within the fitment assembly 10: preferably, when the fitment assembly 10 is made by injection moulding, the primary filter element 11 is also part of the design, so it is made by injection moulding too. The primary filter element 11 comprises one primary filtering active side 111, through which the fluid is passed in order to be filtered. The primary filter element 11 also comprises a primary filtering passive side 112, through which fluid cannot pass. Therefore, the filtering of the fluid can only take place in one sense in the primary filter element 11, from the primary filtering active side 111 towards the primary filtering passive side 112. Typically this is achieve by the use of a filtering element comprising punching or piercing on one of the sides only, which is the side configuring the primary filtering active side 111.

The fitment assembly 10 also comprises, as depicted in Figure 8, an upper sealing wall 17 which is arranged on top of the primary filter element 11 to which the sheets 25, 26 are welded or heat sealed to configure one of the sides of the secondary chamber 22. The fitment assembly 10 further comprises a lower sealing wall 19 arranged over the inlet chamber 120.

The fitment assembly 10 according to the present invention further comprises an upper filtering notch 18 on the upper rear side of the primary filter element 11 and a side frontal filtering notch 18' on the side of the primary filtering element 11: the brewed fluid coming from the secondary chamber 22 is conveyed through this upper filtering notch 18 into the tertiary active chamber 231 from where it is filtered in through the primary filtering active side 111 into the tertiary passive chamber 232, from where the brewed and filtered fluid is then conveyed through the side filtering notch 18' to the outlet duct 12 from where it flows down and is dispensed into a drinking cup.

The fitment assembly 10 is preferably rigid and is made of a rigid plastic material, preferably by injection moulding. Typically, this plastic material configuring the fitment assembly 10 can be selected from the following: polypropylene, polyethylene, polyethylene terephthalate and polylactic acid. Also according to a less preferred embodiment the fitment assembly 10 can be made of a metal like aluminium or tin-plate, for example.

According to the invention, the pack 100 will also be provided with identification means 30: these identification means 30 comprise the information of the beverage medium comprised in the pack 100 and also the information for the processing of the beverage medium in the machine to prepare the infusion beverage targeted (therefore, comprising the recipe information to make the infusion beverage). The identification means 30 will be arranged either in the fitment assembly 10 and/or in the container 20. A simpler execution will be to provide these identification means 30 in the pack 20, preferably in the lateral sides 27, 27' where the flexible sheets 25 and 26 are welded or heat sealed together. The identification means 30 comprise the information provided to the machine regarding the process parameters to be followed to obtain the infusion beverage, in particular: temperature of the fluid (typically water) introduced by the piercing and injecting means 230 in the inlet chamber 120, total volume of water introduced and water flow to be provided through the mentioned means. Further explanation will be provided in the description that follows.

One of the primary advantages of the present invention is that the pack 100 is reversible, so the user can introduce it in one sense or the other in the machine, and the process will develop in the same way independently on the sense of introduction. For this reason, when the identification means 30 are provided in the pack 20, two sets of identification means 30 will preferably be provided, symmetrically arranged, on both lateral sides, 27 and 27', of the container 20 as shown in Figure 1: in this way, the machine can read one or the other set of identification means 30, depending on the sense in which the pack 100 has been introduced in the machine.

Such identification means 30 can comprise any kind of recognition means such as, for example, mechanical codes, optical codes, RFID tags, bar codes, magnetic codes, embossing codes, LED or any other. Most preferably, the identification means 30 of the invention will be made as punched holes 31 (schematically represented in Figure 1) arranged on the sealed lateral edges 27, 27' of the container 20. When the two sheets 25 and 26 are brought together and are welded or heat sealed on the edges to configure the container 20, additional punching will be provided, thus configuring the punched holes 31. A plurality of holes will typically be provided vertically on each one of the lateral sides 27 and 27' of the container 20 to configure the two sets of identification means 30 symmetrically arranged in the container 20: these holes will be made transparent for light, allowing the light to pass through. When light passes through the plurality of holes configuring these identification means 30, the machine will be then provided with information on the process parameters to follow in order to prepare the infusion beverage targeted.

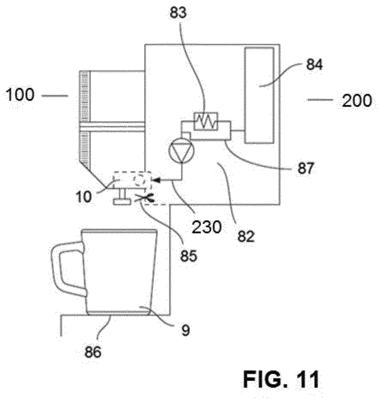

According to yet another aspect, the invention refers to a *machine 200* for preparing infusion beverage products from a pack 100 as described previously. The machine 200, as schematically illustrated in Figure 11, comprises receiving means 201 adapted to accommodate the pack 100 preferably in such a way that the pack 100 is positioned vertically and the fitment assembly 10 is positioned at the bottom of the pack 100. The machine 200 further comprises injecting means 230, preferably piercing and injecting means, designed for piercing the cover or lid over the inlet chamber 120 for introducing water into the mentioned inlet chamber 120. Because the pack 100 is configured reversible, either if the pack 100 is introduced in one sense or the other in the machine 200, the piercing and injecting 230 means will pierce either one or the other side of the lid or cover over the inlet chamber 120, with same result as water will in any case be conveyed into the inlet chamber 20 and from there, through the symmetrically arranged inlet notch 110, into the primary chamber 21 to be infused with the beverage medium.

Preferably, the piercing and injecting means 230 comprise a fluid needle, called simply needle, comprising an inner duct or pipe through which fluid, typically water, is introduced in the inlet chamber 120. Water is injected at a low pressure, typically less than 1 bar, more preferably at about 0.5 bar as the beverage is prepared by infusion process. As the pressure is low, there is no problem of tightness with the pack 100 and machine 200 of the invention. The water is introduced by the piercing and injecting means 230 in a continuous way during a certain time and under a certain flow rate: this information is comprised in the identification means 30, and was referred to as process parameters (typically also called infusion parameters). Therefore, with the pack 100 of the invention, there is no pre-wetting or pre-infusion phase of the beverage medium (typically, the pre-wetting or pre-infusion time is minimum of around 20 or 25 seconds in known devices of the prior art), the process is done in continuous and is faster (usually, it takes around 1 minute to have the infusion beverage ready). The water injected by the piercing and injecting means 230 is hot, and is preferably provided at a temperature comprised between 60°C and 95°C.

The piercing and injecting means 230 can also comprise a toroidal ring, preferably made of rubber, ensuring that there is no leakage of fluid outside the inlet chamber 120 while the piercing and injecting means 230 are introduced and are injecting water into the inlet chamber 120.

The machine 200 also comprises a data reader, preferably comprising an optical device, which reads and retrieves the information from the identification means 30 regarding the process parameters to be used for preparing the infusion beverage. Preferably, the process parameters used by the machine 200 to prepare the correct recipe of the product in the pack 100, retrieved by the data reader, would be at least one or a combination of the following: temperature of the fluid (typically water) introduced by the piercing and injecting means 230 in the inlet chamber 120; total volume of water introduced in the inlet chamber 120; and water flow provided through the piercing and 230 injecting means also into the inlet chamber 120.

Preferably, the data reader will retrieve the information from the identification means 30 in the pack 100 by a light emitter device emitting light passing through the punched holes 31 configuring the identification means 30.

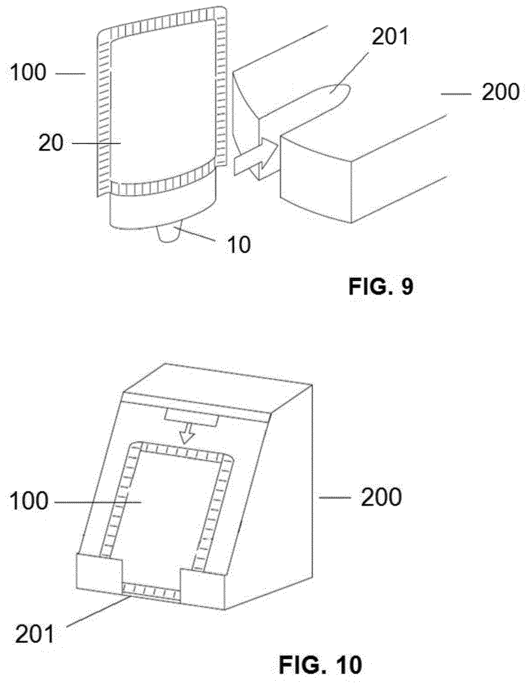

Typically, as the pack 100 is processed to obtain the infusion beverage in an essentially vertical position in the machine 200, the pack 100 will be introduced either frontally in the machine 200 (as schematically represented in Figure 10) or laterally, so that the pack 100 is slidably inserted into a dedicated insert in the machine 100 (as schematically represented in Figure 9). In the first case, that of Figure 10, the receiving means 201 in the machine 200 will be arranged to accommodate the pack 100 in a frontal position: as the pack 100 is reversible, it can be introduced either in a frontal positioning in the dedicated receiving means 201, or in a rear positioning in said receiving means 201. In the second case, that of Figure 9, the receiving means 201 in the machine 200 will be arranged to accommodate the pack 100 in a lateral or side position: as the pack 100 is reversible, it can be introduced in any of the two possible lateral senses into the dedicated receiving means 201. In any of the two cases described, the piercing and injecting means 230 will be able to pierce and inject water in one of the two sides of the inlet chamber 120, and the data reader will also be able to read the information in one of the two sets of identification means 30 provided in the container 20.

Moreover, the machine 200 of the invention comprises a fluid supply or tank 84 and a pump 82, preferably a water pump, providing water to the piercing and injecting means 230. This water is preferably provided at a certain temperature, preferably comprised between 60°C and 95°C, with the aid of a heater 83. The machine can optionally also comprise a bypass line 87 for delivering fluid, typically water, at ambient temperature, and a valve (not illustrated) for the selection of either hot or ambient fluid. The machine 200 will also typically comprise a device 85 for cutting or tearing the plug 14 from the outlet duct 12 once the pack 100 has been inserted in the machine 200 or once the brewing process has started.

The cutting device 85 for cutting or tearing the plug 14 is preferably arranged in the machine 200 in such a way that the plug is automatically cut when the pack 100 is introduced in the machine 200 or when the beverage preparation is activated.

Preferably the machine 200 further comprises a positioning area 86 for allocating a drinking cup 9 under the dispensing outlet duct 12 of the pack 100 when a beverage is prepared.

Also, the machine 200 typically comprises squeezing means (not illustrated in Figure 11) which squeeze the container 20 once the infusion beverage has been dispensed in order to extract any remaining liquid inside the container 20, so as to avoid dripping. Moreover, the squeezing of the container 20 will allow that the end pack 100, which is disposable, will have a final more compact shape that will facilitate its removal.

Also according to the invention, a *pack 100* as the one described above comprising a fitment assembly 10 and a container 20, *would preferably be made following these steps*:
- folding a sheet of material and bonding both lateral sides 27 and 27' of it to form a pouch;
- bonding together by welding or heat sealing the two sheets 25 and 26 to conform the compartmental channel 250;
- filling the primary chamber 21 configured inside the volume of the pack 100 with a beverage medium, preferably tea leaves;
- positioning the fitment assembly 10 in the lower part of the pouch, where remaining open edges exist and bonding (by welding or heat sealing) said lower side 29;
- configuring the identification means 30 preferably by punching the lateral sides 27 and 27' of the pouch or container 20;
- configuring the secondary filter element 24 on the upper part of the pouch, also by punching.

The *method of using a pack 100* configured as previously described, comprising a fitment assembly 10 and a container 20, in a machine 200 to produce an infusion beverage can comprise several steps, as will be described herewith in what follows.

First, the pack 100 is introduced in the machine 200 in an essentially vertical way, in such a manner that the fitment assembly 10 is arranged at the bottom side of the pack 100. Either once the pack has been introduced or once the preparation and dispensing step starts, the machine 200 will cut or tear off the plug 14 from the outlet duct 12 in order to leave open the opening of the outlet duct 121. Then, the piercing and injecting means 230 from the machine 200 will pierce the lid or membrane arranged over the inlet chamber 120. As already explained, any of the two sides of the membrane over the inlet chamber 120 will be pierced, depending on the sense in which the pack 100 has been introduced in the machine 200.

Also, the data reader of the machine 200 will read the identification means 30 in one of the sides 27 or 27' of the container 20, depending on the sense in which it has been introduced. The data reader will then retrieve the information regarding the temperature, the total volume and the flow rate of the fluid, typically water, to be introduced by the piercing and injecting means 230 into the inlet chamber 120.

Once the membrane is pierced, the piercing and injecting means 230 will inject preferably water, inside the inlet chamber 120, at a pressure below 1 bar, most preferably at around 0.5 bar. The rest of parameters of this injection (temperature, volume and flow rate, referred to before as process parameters) will have been provided by the data reader when reading the identification means 30. The water injected will then be conveyed from the inlet chamber 120 through the inlet notch 110 into the primary chamber 21, where it will be infused with the beverage medium, preferably tea leaves. The water will then flow in a continuous way from the lower part of the primary chamber 21 towards the upper part of the chamber 21.

The fluid so infused with the beverage medium will then pass through the secondary filter element 24, which is configured in such a way that the beverage medium will be left in the primary chamber 21 and the infused fluid will pass through and will be directed towards the secondary chamber 22.

Once in this secondary chamber 22, the infused fluid conveyed to the lower part of said chamber will be conveyed by gravity and will be forced to pass through the upper filtering notch 18 (as there is the upper sealing wall 17 sealed on its perimeter to the flexible sheets 25, 26 preventing the fluid to go through it) and into the tertiary active chamber 231.

From the tertiary active chamber 231 the fluid will then pass through the primary filtering active side 111 into the tertiary passive chamber 232, thus being filtered: then, the filtered fluid is conveyed through the side filtering notch 18' and into the outlet duct 12 from where the final product is dispensed.

It is important to remark that the design of the fitment assembly 10 together with the flexible sheets 25 and 26 which are bonded (welded or thermo sealed, typically) to it define paths for the fluid to flow inside the pack 100 in such a way that the fluid is forced to follow these paths and cannot go through any others. In fact, the sheets 25, 26 are bonded to the fitment assembly 10 in a tight way, therefore tight paths are configured. Moreover, the primary chamber 21 and the secondary chamber 22 in the container 20 are also tight and the fluid is again conveyed under certain paths.

Particularly, these sealed or tight paths are the following:
- once the fluid is injected into the inlet chamber 120, the only path to follow is that formed by the inlet notches 110 in the inlet chamber 120 together with the flexible sheets 25 and 26, so the fluid is forced to pass through these inlet notches 110 and flow into the primary chamber 21;
- inside the primary chamber 21, the fluid can only be conveyed upwards and towards the secondary filter element 24, through the lateral side of the container 27 and the compartmental channel 250;
- inside the secondary chamber 22, the fluid can only flow downwards and towards the upper filtering notch 18, flowing between the compartmental channel 250 and the lateral side of the container 27', passing through the upper filtering notch 18 into the tertiary active chamber 231;
- inside the tertiary active chamber 231, everything is sealed and the only path possible for the fluid is to go through the primary filtering active side 111 of the primary filter element 11, and into the tertiary passive chamber 232;
- inside the tertiary passive chamber 232, everything is sealed and the only way possible for the fluid is to go through the side filtering notch 18', therefore being confronted with the opening of the outlet duct 12, from where the fluid (already infused and filtered) is finally dispensed by gravity into a drinking cup or the like.

The primary filter element 11 in the fitment assembly 10 is intended to do a fine filtering of small particles (typically, below 50 microns) which may be conveyed together with the infusion beverage. The secondary filter element 24 is intended to filter bigger particles: in fact, it prevents the beverage medium, typically tea leaves, from passing together with the fluid into the secondary chamber 22.

At the end of the process, the squeezing means of the machine 200 will squeeze the container 20 with the aim of evacuating any remaining liquid inside the container 20, in order to avoid any dripping, and also with the aim of reducing the final volume of the container 20, making it more compact, so that its removal is easier.

Some of the *advantages* of the disposable pack of the invention and of the machine processing these packs will be described in what follows.

The pack of the invention is configured in a reversible way, so it can be operated in the machine in any sense in which it has been introduced, which presents a primary advantage for the consumer, who does not need to check or introduce the pack in a specific way. Therefore, it is one aim of the invention to propose a consumer friendly preparation of infusion beverages, where the beverage from the pack is ready to be served and does not require any additional processing. Moreover, best in-cup results are achieved as the extraction and processing is pre-defined and in fact comprised in the information on the identification means.

Another advantage comes from the manufacturing of the packs of the invention: as the fitment assembly has the same outer shape on both of its sides, when the flexible sheets are laid over at least part of this fitment assembly, there is no risk of crippling.

Also, in the pack of the invention the ingredients are fully protected from atmosphere before use. Besides, these packs present a low environmental impact since they can be made of a laminated pouch with a small insert piece (fitment assembly) of plastic.

The space needed for storing the packs according to the invention, the space needs the consumer has to preview for the packs is clearly much less than that for typical capsule containers, for example.

Other advantages of the invention come from the machine: the machine elements remain very simple and limited to a simple fluid needle, typically a simple water needle, piercing the pack and injecting the fluid, typically water, into the pack, to prepare the infusion beverage. Also, the data reader needed to read and retrieve information from the identification means is a simple device.

Also, another important advantage of the invention is to propose packs where the contact of ingredients and prepared infusion beverage with the machine is avoided and the risk of cross contamination is therefore limited. The prepared beverages present optimal organoleptic properties.

Another main advantage for the consumer, provided by the invention is that the piercing and injecting means, typically a needle, do not touch the product at all, so any type of contamination is avoided.

Besides, some other advantages of the pack of the invention are indicated herewith:
- the pack is flexible and adaptable, thus easy to handle
- the weight of the pack is low and remains minimised
- the infusion parameters come with the pack and the recipe is therefore optimised, for each product obtained
- the pack is disposable so requires no cleaning of the machine and is extremely practical to use
- the machine operates the pack under direct flow, so there is no fluid which flows inside any part of the machine, avoiding any cleaning needs or any possible contamination in the machine
- the process of obtaining the infusion beverage is continuous, which therefore minimises the time needed
- there is no pre-wetting phase or time needed for preparing the infusion beverage, therefore the process is faster than with traditional packs
- the infusion beverage directly flows into the cup or recipient, so the process is simple and easy for the consumer.

Although the present invention has been described with reference to preferred embodiments thereof, many modifications and alternations may be made by a person having ordinary skill in the art without departing from the scope of this invention which is defined by the appended claims.

### LIST OF REFERENCES

- 100: Disposable Pack
21 Primary chamber
22 Secondary chamber
23 Tertiary chamber
231 Tertiary active chamber
232 Tertiary passive chamber
120 Inlet chamber
110 Inlet notch
- 10: Fitment assembly
11 Primary filter element
111 Primary filtering active side
112 Primary filtering passive side
12 Outlet duct
121 Opening outlet duct
13 Ribs
14 Plug
15 Bond
16 Weakened area
17 Upper sealing wall
18 Upper filtering notch
18' Side filtering notch
19 Lower sealing wall
- 20: Container
25 Sheet of container
26 Sheet of container
210 Excrescence
30 Identification means
31 Punched holes
24 Secondary filter element
240 Secondary filtering configuring elements
250 Compartmental channel
27 Lateral side of container
27' Lateral side of container
28 Upper side of container
29 Lower side of container
- 200: Machine
201 Receiving means
9 Drinking cup
230 Injecting means
85 Cutting device
84 Fluid tank
83 Heater
87 Bypass line
82 Pump
86 Positioning area

## Claims

1. Fitment assembly (10) for a container comprising a beverage medium, the fitment assembly (10) comprising:
an inlet chamber (120) to accommodate an inflow of fluid for infusion with the beverage medium to produce a beverage
an outlet duct (12);
**characterized in that** it comprises
a tertiary active chamber (231) on one of the sides of the fitment assembly (10) to where the infused fluid arrives and a tertiary passive chamber (232) on the reverse side of the fitment assembly (10) to where the infused fluid arrives after having been filtered;
a primary filter element (11) filtering the infused fluid coming from the tertiary active chamber (231) and flowing into the tertiary passive chamber (232); and **in that** the outlet duct (12) is arranged in such a way that the filtered and infused beverage from the tertiary passive chamber (232) enters the outlet duct (12) and flows by gravity towards the exterior of the fitment assembly (10).

2. Fitment assembly (10) according to claim 1 wherein the inlet chamber (120) is reversibly configured, the fitment assembly (10) comprising a lid with a first section overlying one of the sides of the inlet chamber (120) and closing the tertiary active chamber (231), and a second section overlying the reverse side of the inlet chamber (120) and closing the tertiary passive chamber (232).

3. Fitment assembly (10) according to any of claims 1-2 further comprising two symmetrically arranged inlet notches (110) allowing the fluid to flow out of the inner volume of the inlet chamber (120) for infusion with the beverage medium.

4. Fitment assembly (10) according to any of the previous claims further comprising an upper filtering notch (18) arranged so as to allow the fluid to go through and into the inner volume of the tertiary active chamber (231).

5. Fitment assembly (10) according to any of the previous claims further comprising a side frontal filtering notch (18') arranged so as to allow the fluid to be conveyed towards the entrance of the outlet duct (12).

6. Fitment assembly (10) according to any of the previous claims, being made of a rigid plastic material, preferably made by injection moulding, the material being preferably selected from: polypropylene, polyethylene, polyethylene terephthalate and/or polylactic acid.

7. Fitment assembly (10) according to any of the previous claims, wherein the outlet duct (12) is closed by means of a plug (14), the plug (14) being attached to the fitment assembly (10) on another one of its sides, the outlet duct (12) further comprising a weakened area (16) near the plug (14) allowing the separation of the plug (14) from the outlet duct (12).

8. Pack (100) for preparing a beverage, comprising a container (20) where a beverage medium is stored and a fitment assembly (10) according to any of claims 1-7.

9. Pack (100) according to claim 8 presenting an essentially plane shape being substantially flexible and configured as a pouch or sachet, the pack being oriented along a plane essentially vertically oriented during beverage production, such that the fitment assembly (10) is preferably arranged at the lower side of the pack during beverage production.

10. Pack (100) according to any of claims 8-9, wherein the container (20) is made of two flexible sheets bonded together at least on their lateral sides, the fitment assembly (10) being also bonded to one of the remaining open edges of the pack (100) in such a way that the flexible sheets also conform a piercable lid over the fitment assembly (10).

11. Pack (100) according to any of claims 8-10, wherein the two flexible sheets are configured by one single flexible sheet folded in half into two parts joined at its free edges to define the inner volume of the container (20).

12. Pack (100) according to any of claims 10-11, wherein the flexible sheets are water impermeable, are bonded together by thermo sealing and are made of a material being one or a combination of the following: plastic laminates, metallised foil or alufoil or fibre base material.

13. Pack (100) according to any of claims 10-12, wherein the two flexible sheets are bonded together in a specific area configuring a compartmental channel (250) inside the volume of the pack (100), the compartmental channel (250) being arranged in such a way that it defines inside the volume of the pack (100) a primary chamber (21) where a beverage medium is stored and a secondary chamber (22) where the fluid is conveyed towards the fitment assembly (10).

14. Pack (100) according to claim 13, further comprising a secondary filter element (24) arranged on one of the sides of the primary chamber (21) leading to the secondary chamber (22), designed in such a way that, the fluid leaves the primary chamber (21) through this secondary filter element (24) into the secondary chamber (22), the beverage medium being prevented from passing through the secondary filter element and into the secondary chamber (22).

15. Pack (100) according to claim 14, wherein the secondary filter element (24) is configured by bonding together at certain parts the sheets of flexible material making the container (20), these bonded parts configuring a plurality of secondary filtering configuring elements (240) allowing the flow of the fluid towards the secondary chamber (22) and preventing the flow of the beverage medium.

16. Pack (100) according to any of claims 8-15, wherein the filtering characteristics of the secondary filter element (24) are a function of the size and the number of the secondary filtering configuring elements (240), and also of the distance between these secondary filtering configuring elements (240).

17. Pack (100) according to any of claims 8-16, further comprising identification means (30) comprising the information on the process parameters to produce the beverage, as a function of the beverage medium, the process parameters being at least one or a combination of the following: temperature of the fluid accommodated into the inlet chamber (120), total volume of fluid and fluid flow accommodated inside the inlet chamber (120).

18. Pack (100) according to claim 17, wherein two sets of symmetrically arranged identification means (30) are arranged in the pack, so that the process parameters in the identification means (30) can be reversibly read.

19. Pack (100) according to any of claims 17-18, wherein the identification means (30) comprise recognition means being at least one or a combination of the following ones: mechanical codes, optical codes, RFID tags, bar codes, magnetic codes, embossing codes or LED, the recognition means preferably comprising a plurality of punched holes arranged on the bonded lateral edges of the container (20).

## Patentansprüche

1. Zubehörbaugruppe (10) für einen Behälter, der ein Getränkemedium umfasst, wobei die Zubehörbaugruppe (10) Folgendes umfasst:
eine Einlasskammer (120) zum Aufnehmen eines Zustroms von Fluid zur Infusion mit dem Getränkemedium, um ein Getränk zu erzeugen;
einen Auslasskanal (12);
**dadurch gekennzeichnet, dass** sie Folgendes umfasst:
eine tertiäre aktive Kammer (231) auf einer der Seiten der Zubehörbaugruppe (10), an der das infundierte Fluid ankommt, und eine tertiäre passive Kammer (232) auf der entgegengesetzten Seite der Zubehörbaugruppe (10), an der das infundierte Fluid ankommt, nachdem es gefiltert wurde;
ein primäres Filterelement (11), das das infundierte Fluid filtert, das aus der tertiären aktiven Kammer (231) kommt und in die tertiäre passive Kammer (232) strömt; und
dadurch, dass der Auslasskanal (12) derart angeordnet ist, dass das gefilterte und infundierte Getränk aus der tertiären passiven Kammer (232) in den Auslasskanal (12) eintritt und durch Schwerkraft zur Außenseite der Zubehörbaugruppe (10) strömt.

2. Zubehörbaugruppe (10) nach Anspruch 1, wobei die Einlasskammer (120) reversibel konfiguriert ist, wobei die Zubehörbaugruppe (10) einen Deckel umfasst mit einem ersten Abschnitt, der eine der Seiten der Einlasskammer (120) überlagert und die tertiäre aktive Kammer (231) verschließt, und einem zweiten Abschnitt, der die Rückseite der Einlasskammer (120) überlagert und die tertiäre passive Kammer (232) verschließt.

3. Zubehörbaugruppe (10) nach einem der Ansprüche 1 bis 2, ferner zwei symmetrisch angeordnete Einlasskerben (110) umfassend, die dem Fluid ermöglichen, zur Infusion mit dem Getränkemedium aus dem Innenvolumen der Einlasskammer (120) zu strömen.

4. Zubehörbaugruppe (10) nach einem der vorstehenden Ansprüche, ferner eine obere Filterkerbe (18) umfassend, die derart angeordnet ist, dass das Fluid durch sie hindurch und in das Innenvolumen der tertiären aktiven Kammer (231) strömen kann.

5. Zubehörbaugruppe (10) nach einem der vorstehenden Ansprüche, ferner eine seitliche frontale Filterkerbe (18') umfassend, die derart angeordnet ist, dass das Fluid zum Eingang des Auslasskanals (12) befördert werden kann.

6. Zubehörbaugruppe (10) nach einem der vorstehenden Ansprüche, die aus einem starren Kunststoffmaterial hergestellt ist, das vorzugsweise durch Spritzgießen hergestellt ist, wobei das Material vorzugsweise ausgewählt ist aus: Polypropylen, Polyethylen, Polyethylenterephthalat und/oder Polymilchsäure.

7. Zubehörbaugruppe (10) nach einem der vorstehenden Ansprüche, wobei der Auslasskanal (12) durch einen Stopfen (14) verschlossen ist, wobei der Stopfen (14) an der Zubehörbaugruppe (10) auf einer anderen Seiten befestigt ist und der Auslasskanal (12) ferner einen geschwächten Bereich (16) in der Nähe des Stopfens (14) umfasst, der die Trennung des Stopfens (14) vom Auslasskanal (12) ermöglicht.

8. Packung (100) zum Herstellen eines Getränks, einen Behälter (20), in dem ein Getränkemedium gelagert ist, und eine Zubehörbaugruppe (10) nach einem der Ansprüche 1 bis 7 umfassend.

9. Packung (100) nach Anspruch 8, die eine im Wesentlichen ebene Form darstellt und im Wesentlichen flexibel ist und als ein Beutel oder Kissen konfiguriert ist, wobei die Packung entlang einer Ebene ausgerichtet ist, die während der Getränkeherstellung im Wesentlichen vertikal ausgerichtet ist, sodass die Zubehörbaugruppe (10) während der Getränkeherstellung vorzugsweise an der unteren Seite der Packung angeordnet ist.

10. Packung (100) nach einem der Ansprüche 8 bis 9, wobei der Behälter (20) aus zwei flexiblen Folien hergestellt ist, die zumindest an ihren lateralen Seiten miteinander verbunden sind, wobei die Zubehörbaugruppe (10) auch mit einer der verbleibenden offenen Kanten der Packung (100) derart verbunden ist, dass sich die flexiblen Folien auch an einen durchstechbaren Deckel über der Zubehörbaugruppe (10) anformen.

11. Packung (100) nach einem der Ansprüche 8 bis 10, wobei die zwei flexiblen Folien durch eine einzige flexible Folie konfiguriert sind, die in der Mitte in zwei Teile gefaltet ist, die an ihren freien Kanten verbunden sind, um das Innvenvolumen des Behälters (20) zu bilden.

12. Packung (100) nach einem der Ansprüche 10 bis 11, wobei die flexiblen Folien wasserundurchlässig sind, durch Thermosiegelung miteinander verbunden sind und aus einem Material hergestellt sind, das eines oder eine Kombination der folgenden ist: Kunststofflaminate, metallisierte Folie oder Aluminiumfolie oder Faserbasismaterial.

13. Packung (100) nach einem der Ansprüche 10 bis 12, wobei die zwei flexiblen Folien in einem spezifischen Bereich miteinander verbunden sind, der einen Kammerkanal (250) im Inneren des Volumens der Packung (100) konfiguriert, wobei der Kammerkanal (250) derart angeordnet ist, dass er innerhalb des Volumens der Packung (100) eine primäre Kammer (21), in der ein Getränkemedium gelagert ist, und eine sekundäre Kammer (22) definiert, in der das Fluid in Richtung der Zubehörbaugruppe (10) befördert wird.

14. Packung (100) nach Anspruch 13, ferner ein sekundäres Filterelement (24) umfassend, das auf einer der Seiten der primären Kammer (21) angeordnet ist, die zu der sekundären Kammer (22) führt, und derart konzipiert ist, dass das Fluid aus der primären Kammer (21) durch dieses sekundäre Filterelement (24) in die sekundäre Kammer (22) gelangt, wobei verhindert wird, dass das Getränkemedium durch das sekundäre Filterelement und in die sekundäre Kammer (22) gelangt.

15. Packung (100) nach Anspruch 14, wobei das sekundäre Filterelement (24) durch Miteinanderverbinden bestimmter Teile der Folien aus flexiblem Material, die den Behälter (20) bilden, konfiguriert ist, wobei diese verbundenen Teile eine Mehrzahl von sekundären Filterkonfigurierungselementen (240) bilden, die den Strom des Fluids in Richtung der sekundären Kammer (22) ermöglichen und den Strom des Getränkemediums verhindern.

16. Packung (100) nach einem der Ansprüche 8 bis 15, wobei die Filtereigenschaften des sekundären Filterelements (24) von der Größe und der Anzahl der sekundären Filterkonfigurierungselemente (240) sowie vom Abstand zwischen diesen sekundären Filterkonfigurierungselementen (240) abhängen.

17. Packung (100) nach einem der Ansprüche 8 bis 16, ferner Identifikationsmittel (30) umfassend, die Informationen über die Prozessparameter zur Herstellung des Getränks in Abhängigkeit des Getränkemediums umfassen, wobei die Prozessparameter mindestens eines oder eine Kombination der folgenden sind: Temperatur des in der Einlasskammer (120) aufgenommenen Fluids, Gesamtvolumen des Fluids und Fluidstrom, der innerhalb der Einlasskammer (120) aufgenommen ist.

18. Packung (100) nach Anspruch 17, wobei zwei Sätze symmetrisch angeordneter Identifikationsmittel (30) in der Packung angeordnet sind, sodass die Prozessparameter in dem Identifikationsmittel (30) reversibel gelesen werden können.

19. Packung (100) nach einem der Ansprüche 17 bis 18, wobei die Identifikationsmittel (30) Erkennungsmittel umfassen, die mindestens eines oder eine Kombination der folgenden sind: mechanische Codes, optische Codes, RFID-Tags, Strichcodes, Magnetcodes, Prägecodes oder LED, wobei die Erkennungsmittel vorzugsweise eine Mehrzahl gestanzter Löcher umfassen, die an den verbundenen seitlichen Kanten des Behälters (20) angeordnet sind.

## Revendications

1. Aménagement (10) destiné à un récipient comprenant un milieu de boisson, l'aménagement (10) comprenant :
une chambre d'entrée (120) pour recevoir un écoulement de fluide en vue d'une infusion avec le milieu de boisson pour produire une boisson ;
un conduit de sortie (12) ;
**caractérisé en ce qu'**il comprend
une chambre active tertiaire (231) sur l'un des côtés de l'aménagement (10) à l'endroit où le fluide infusé arrive et une chambre passive tertiaire (232) sur le côté opposé de l'aménagement (10) à l'endroit où le fluide infusé arrive après avoir été filtré ;
un élément de filtre primaire (11) filtrant le fluide infusé provenant de la chambre active tertiaire (231) et s'écoulant dans la chambre passive tertiaire (232) ; et
**en ce que** le conduit de sortie (12) est agencé de sorte que la boisson filtrée et infusée provenant de la chambre passive tertiaire (232) entre dans le conduit de sortie (12) et s'écoule par gravité vers l'extérieur de l'aménagement (10).

2. Aménagement (10) selon la revendication 1, dans lequel la chambre d'entrée (120) est configurée de manière réversible, l'aménagement (10) comprenant un couvercle avec une première section recouvrant l'un des côtés de la chambre d'entrée (120) et fermant la chambre active tertiaire (231) et une seconde section recouvrant le côté inverse de la chambre d'entrée (120) et fermant la chambre passive tertiaire (232).

3. Aménagement (10) selon l'une quelconque des revendications 1 ou 2 comprenant en outre deux encoches d'entrée agencées symétriquement (110) permettant au fluide de s'écouler hors du volume interne de la chambre d'entrée (120) pour infusion avec le milieu de boisson.

4. Aménagement (10) selon l'une quelconque des revendications précédentes, comprenant en outre une encoche de filtrage supérieure (18) agencée de manière à permettre au fluide de passer à travers et dans le volume interne de la chambre active tertiaire (231).

5. Aménagement (10) selon l'une quelconque des revendications précédentes comprenant en outre une encoche de filtrage frontale latérale (18') agencée de façon à permettre au fluide d'être transporté vers l'admission du conduit de sortie (12).

6. Aménagement (10) selon l'une quelconque des revendications précédentes, étant réalisé dans un matériau plastique rigide, de préférence réalisé par moulage par injection, le matériau étant de préférence choisi parmi : du polypropylène, du polyéthylène, du téréphtalate de polyéthylène et/ou de l'acide polylactique.

7. Aménagement (10) selon l'une quelconque des revendications précédentes, dans lequel le conduit de sortie (12) est fermé au moyen d'un bouchon (14), le bouchon (14) étant attaché à l'aménagement (10) sur un autre de ses côtés, le conduit de sortie (12) comprenant en outre une zone affaiblie (16) à proximité du bouchon (14) permettant la séparation du bouchon (14) du conduit de sortie (12).

8. Emballage (100) pour la préparation d'une boisson, comprenant un récipient (20) où un milieu de boisson est stocké et un aménagement (10) selon l'une quelconque des revendications 1 à 7.

9. Emballage (100) selon la revendication 8, présentant une forme essentiellement plane étant sensiblement flexible et configuré comme une poche ou un sachet, l'emballage étant orienté le long d'un plan essentiellement orienté verticalement pendant la production de boisson, de sorte que l'aménagement (10) est agencé de préférence au niveau du côté inférieur de l'emballage pendant la production de boisson.

10. Emballage (100) selon l'une quelconque des revendications 8 ou 9, dans lequel le récipient (20) est constitué de deux feuilles flexibles liées ensemble au moins sur leurs bords latéraux, l'aménagement (10) étant également lié à l'un des bords ouverts restants de l'emballage (100) de manière à ce que les feuilles flexibles épousent également un couvercle pouvant être percé sur l'aménagement (10).

11. Emballage (100) selon l'une quelconque des revendications 8 à 10, dans lequel les deux feuilles flexibles sont constituées par une seule feuille flexible pliée en deux pour former deux pièces jointes au niveau de ses bords libres pour définir le volume interne du récipient (20).

12. Emballage (100) selon l'une quelconque des revendications 10 ou 11, dans lequel les feuilles flexibles sont imperméables à l'eau, liées entre elles par thermoscellage et sont constituées d'un matériau étant l'un ou une combinaison des éléments suivants : stratifiés plastiques, feuille métallisée ou feuille d'aluminium ou matériau à base de fibres.

13. Emballage (100) selon l'une quelconque des revendications 10 à 12, dans lequel les deux feuilles flexibles sont liées ensemble dans une zone spécifique constituant un canal de cloisonnement (250) à l'intérieur du volume de l'emballage (100), le canal de cloisonnement (250) étant agencé de manière à définir un volume à l'intérieur du volume de l'emballage (100) une chambre primaire (21) où une boisson est stockée et une chambre secondaire (22) où le fluide est transporté vers l'aménagement (10).

14. Emballage (100) selon la revendication 13, comprenant en outre un élément de filtre secondaire (24) agencé sur un des côtés de la chambre primaire (21) menant à la chambre secondaire (22), conçu de manière telle que le fluide sort de la chambre primaire (21) à travers cet élément de filtre secondaire (24) dans la chambre secondaire (22), le milieu de boisson étant empêché de passer à travers l'élément de filtre secondaire et dans la chambre secondaire (22).

15. Emballage (100) selon la revendication 14, dans lequel l'élément de filtre secondaire (24) est conçu en liant ensemble au niveau de certaines parties des feuilles de matériau flexible constituant le récipient (20), ces parties liées définissant une pluralité d'éléments de configuration de filtrage secondaires (240) permettant l'écoulement du fluide vers la chambre secondaire (22) et empêchant l'écoulement du milieu de boisson.

16. Emballage (100) selon l'une quelconque des revendications 8 à 15, dans lequel les caractéristiques de filtrage de l'élément de filtre secondaire (24) sont fonction de la taille et du nombre des éléments de configuration de filtrage secondaires (240), ainsi que de la distance entre ces éléments de configuration de filtrage secondaires (240).

17. Emballage (100) selon l'une quelconque des revendications 8 à 16, comprenant en outre un moyen d'identification (30) comprenant les informations sur les paramètres de traitement pour produire la boisson, en fonction du milieu de boisson, les paramètres de traitement étant au moins l'un ou une combinaison des éléments suivants : température du fluide logé dans la chambre d'entrée (120), volume total de fluide et écoulement de fluide logé à l'intérieur de la chambre d'entrée (120).

18. Emballage (100) selon la revendication 17, dans lequel deux ensembles de moyens d'identification agencés symétriquement (30) sont agencés dans l'emballage, de sorte que les paramètres de traitement dans les moyens d'identification (30) peuvent être lus de manière réversible.

19. Emballage (100) selon l'une quelconque des revendications 17 ou 18, dans lequel les moyens d'identification (30) comprennent des moyens de reconnaissance étant au moins l'un ou une combinaison des éléments suivants : codes mécaniques, codes optiques, étiquettes RFID, codes à barres, codes magnétiques, codes à gaufrage ou DEL, les moyens de reconnaissance comprenant de préférence une pluralité de trous poinçonnés disposés sur les bords latéraux liés du récipient (20).
